# EUROPÄISCHE PATENTSCHRIFT

(11) **EP 3 046 813 B1**
(45) Veröffentlichungstag und Bekanntmachung des Hinweises auf die Patenterteilung: **14.02.2018**
(21) Anmeldenummer: 14756051.0
(22) Anmeldetag: 28.08.2014
(51) Int. Cl.: B60S 5/00, B62D 27/02, F16B 11/00

(54) **FÜGEVERFAHREN**
JOINING METHOD
PROCÉDÉ D'ASSEMBLAGE

(30) Priorität: 16.09.2013 DE 102013218495
(43) Veröffentlichungstag der Anmeldung: 27.07.2016
(73) Patentinhaber: Henkel AG & Co. KGaA, 40589 Düsseldorf (DE)
(72) Erfinder: PLOTZITZKA, Joachim, 76327 Kleinsteinbach Gem. Pfinztal (DE); SCHWARZE, Hermann J., 8152 Glattbrugg (CH)
(86) Internationale Anmeldenummer: PCT/EP2014/068241
(87) Internationale Veröffentlichungsnummer: WO 2015/036251

(56) Entgegenhaltungen:
- DE-A1- 1 575 156
- DE-A1- 19 748 786
- DE-A1- 19 831 982
- DE-B3- 10 329 231

## Beschreibung

Die Erfindung betrifft ein Verfahren zum Fügen von Flächen, insbesondere aus Blech. Beispielsweise kann ein solches Fügeverfahren zur Reparatur von metallischen Flächen, insbesondere von Fahrzeugkarosserien zum Einsatz kommen.

Im Stand der Technik gibt es eine Vielzahl von Reparaturverfahren von metallischen Flächen. Durch Unfälle beschädigte Schweller von Fahrzeugkarosserien in Stahlblechbauweise können beispielsweise gerichtet oder teilweise herausgetrennt und ersetzt werden. Schwieriger ist eine Reparatur von Schwellern aus Leichtmetall. Hierfür schlägt die EP0591227B1 ein Reparaturverfahren vor, bei dem der Schweller mittels schräg verlaufender Schnitten komplett herausgetrennt wird und anschließend unter der Verwendung von Muffen ein Ersatzträgerteil mit den verbleibenden Trägerstutzen umlaufend verschweißt wird.

Auch sind im Stand der Technik Reparaturverfahren zu finden, die ein Heraustrennen des beschädigten Teils vorsehen, wobei ein Ersatzteil unter Verwendung einer Klebeverbindung eingesetzt wird. Dies eignet sich insbesondere auch dann, wenn es um die Verbindung von verschiedenen Materialien wie zum Beispiel GFK, Aluminium und Stahlblech geht. Beispielsweise offenbart die DE19633911 ein Reparaturverfahren eines teilbaren Schwellers, der ein inneres und ein äußeres Profil aufweist. Das äußere Profil überdeckt hierbei das innere Profil von der Fahrzeugaußenseite und dient als verformbares Schutzelement für das innere Profil und schützt dieses bei leichten bis mittelschweren Kollisionen vor Beschädigung. Die DE19633911 sieht hierzu ein Reparaturverfahren eines solchen Schwellers vor, welches den Austausch des äußeren Profils zum Inhalt hat, wobei auch vorgesehen ist, dass äußere und das innere Profil miteinander zu verkleben.

DE19831982A1 wiederum betrifft ein Verfahren zur Verbindung von Blechbauteilen, wobei zunächst an mehreren, zueinander beabstandeten Heftpunkten eine mechanische Fixierung erzielt wird und anschließend eine Verklebung im Bereich der Verbindungsflächen durchgeführt wird.

Ferner sind Techniken bekannt, bei denen ein beschädigtes Teil beispielsweise einer Fahrzeugkarosserie herausgetrennt wird, wobei ein Ersatzteil mittels einer Hybridverklebung mit der verbliebenen Fahrzeugkarosserie verbunden wird. Hierbei kommen beispielsweise chemisch aushärtende Klebstoffe in fließfähiger Form zum Einsatz, die eine niedrige Anfangsfestigkeit aufweisen, so dass ein mechanisches Fixieren des Ersatzteils notwendig ist. So wird die Klebeverbindung oftmals mit thermischen oder mechanischen Fügeverfahren kombiniert, was unter dem Fachbegriff Hybridverklebung bekannt ist. Typische Verfahren zur Kombination des Klebens sind neben dem Punktschweißen, das Clinchen, Blindnieten, Stanznieten sowie spezielle Schraubverfahren.

In den meisten Anwendungsfällen werden die Verbindungsstellen, die auch unter dem Fachbegriff Nähte bekannt sind, zwischen Ersatzteil und beispielsweise Fahrzeugkarosserie überlackiert, die Nähte im Anschluss selbstverständlich unsichtbar sein und bleiben sollen. Bekannt sind Kaschierungen aus Schwemmzinn. Aufgrund der für das Kaschierverfahren erforderlichen Temperaturen eignet sich Schwemmzinn in der Regel nur für Stahlbleche und nicht geklebte Verbindungen. Der Einsatz von Spachtelmassen hat ferner den Nachteil, dass Spachtelmassen einfallen oder schrumpfen können und die Naht anschließend durchschimmern kann.

Aufgabe der Erfindung ist es daher, ein verbessertes Verfahren zum Fügen von metallischen Flächen bereitzustellen.

Diese Aufgabe wird durch die Merkmale des Anspruchs 1 gelöst.

Vorteilhafte Ausgestaltungen sind mit den abhängigen Ansprüchen angegeben.

Grundgedanke der Erfindung ist ein Verfahren zum Fügen eines ersten und eines zweiten Flächenteils mit jeweils einer Außenseite und einer Innenseite, wobei in einem ersten Schritt an beiden gegenüberliegenden Fügebereichen der Flächenteile jeweils eine Absetzung vorgesehen wird, wobei die Absetzungen derart gestaltet sind, dass das Niveau der Außenseite im Bereich dieser Absetzungen unter dem Niveau der Außenseite der benachbarten Bereichen der jeweiligen Flächenteile liegt, wobei in einem weiteren Schritt die beiden Flächenteile unter Verwendung eines Klebstoffes derart zueinander positioniert werden, dass beide Absetzungen zusammen eine Mulde bilden, wobei entweder in einer ersten Ausführungsform einer der Fügebereiche den jeweils anderen Fügebereich überlappt und wobei der Klebstoff direkt zwischen den überlappenden Fügebereichen vorgesehen ist oder wobei in einer zweiten Ausführungsform eine Fügehilfe zum Einsatz kommt, die jeweils die Fügebereiche der Flächenteile zumindest teilweise überlappt, wobei der Klebstoff jeweils zwischen den Fügebereichen beider Flächenteile und der Fügehilfe vorgesehen ist, wobei in einem weiteren Schritt in der ersten Ausführungsform eine mechanische Fügestelle im Bereich der Mulde zwischen den Fügebereichen eingesetzt oder in der zweiten Ausführungsform bei der Verwendung einer Fügehilfe zwischen den Fügebereichen und der Fügehilfe eine mechanische Fügestelle zur Bereitstellung einer Montageverbindung eingesetzt wird, wobei in einem weiteren Schritt die Mulde mit einer Füllmasse ausgefüllt wird, um einen Niveauausgleich zu dem Niveau der Außenseite der benachbarten Bereichen der jeweiligen Flächenteile zu ermöglichen. Vorzugsweise wird der Klebstoff vor dem Einfüllen der Füllmasse ausgehärtet.

In ausführlicher Form betrifft die Erfindung demnach ein mehrstufiges Verfahren zum Fügen eines ersten und eines zweiten Flächenteils mit jeweils einer Außenseite und einer Innenseite, wobei in einem ersten Schritt an beiden gegenüberliegenden Fügebereichen der Flächenteile jeweils eine Absetzung vorgesehen wird. Denkbar ist hier einerseits ein Absetzen des Fügebereichs zumindest eines Flächenteils beispielsweise mittels einer Absetzzange. Andererseits ist auch insbesondere eine werkseitige Bereitstellung zumindest eines derartig gestalteten Flächenteils denkbar, dass bereits eine Absetzung am Fügebereich vorgesehen ist. Eine derartige Ausgestaltung ist insbesondere für ein Flächenteil denkbar, welches als Ersatzteil zum Einsatz kommt. Unter dem Absetzen ist dabei vorzugsweise nicht ein Absetzungsverfahren zu verstehen, wie es beispielsweise in der Schmiedetechnik eingesetzt wird. Vielmehr ist hierunter vorzugsweise das Einbringen von tiefer liegenden Bereichen oder Stufen in eines oder mehrere Flächenteile zu verstehen. Vorzugsweise ist jede Absetzung der Fügebereiche als durchgehende Absetzung des Flächenteils, also insbesondere ohne Unterbrechungen ausgeführt. Die Absetzungen sind dabei vorzugsweise derart gestaltet, dass das Niveau der Außenseite im Bereich dieser Absetzungen unter dem Niveau der Außenseite der benachbarten Bereiche der jeweiligen Flächenteile liegt.

In einem weiteren Schritt werden die beiden Flächenteile unter Verwendung eines Klebstoffes derart zueinander positioniert, dass beide Absetzungen eine Mulde bilden, wobei in der oben genannten ersten Ausführungsform einer der Fügebereiche den jeweils anderen Fügebereich überlappt und wobei der Klebstoff direkt zwischen den überlappenden Fügebereichen der Flächenteile vorgesehen ist oder wobei in der oberhalb beschrieben zweiten Ausführungsform eine Fügehilfe zum Einsatz kommt, die jeweils die Fügebereiche der Flächenteile zumindest teilweise überlappt, wobei der Klebstoff jeweils zwischen den Fügebereichen beider Flächenteile und der Fügehilfe vorgesehen ist. In der ersten Ausführungsform ist der Klebstoff demnach zwischen der Außenseite des einen Flächenteils im Bereich der Absetzung und der Innenseite des zweiten Flächenteils im Bereich der Absetzung vorgesehen, wobei es insbesondere denkbar ist, den Klebstoff vor der Positionierung auf eines dieser beiden Bereiche zu positionieren oder sogar auf beide Bereiche. In der zweiten Ausführungsform bei welcher die vorzugsweise zumindest bereichsweise flächige Fügehilfe zum Einsatz kommt, insbesondere ein Verbindungsschuh, kann der Klebstoff zwischen der Fügehilfe und je nach Positionierung der Fügehilfe hinsichtlich der Flächenteile jeweils auf den der Fügehilfe gegenüberliegenden der Außen- oder Innenseiten beider Flächenteile im Bereich ihrer Absetzungen vorgesehen werden, wobei es insbesondere denkbar ist, den Klebstoff vor der Positionierung auf eines dieser beiden Bereiche zu positionieren, auf die Fügehilfe oder sogar auf eine Kombination der genannten Bereiche. Vorzugsweise werden bei allen Ausführungsformen alle mit dem Klebstoff in Kontakt tretenden Oberflächen angeschliffen und/oder gereinigt.

In einem weiteren Schritt kommt ferner eine mechanische Fügestelle im Bereich der Mulde zwischen den Fügebereichen oder bei der Verwendung einer Fügehilfe zwischen den Fügebereichen und der Fügehilfe zur Bereitstellung einer Montageverbindung zum Einsatz. Demnach werden in der ersten Ausführungsform die Fügebereiche direkt miteinander mittels der mechanischen Fügestelle miteinander verbunden. Dies kann einerseits durch beispielsweise eine Klemmverbindung geschehen. Andererseits ist es denkbar korrespondierende Öffnungen oder Bohrungen in den überlappenden Fügebereichen vorzusehen oder einzubringen, um beide Flächenteile beispielsweise mittels einer Nietverbindung oder Schraubverbindung mechanisch zu verbinden. In der zweiten Ausführungsform können beispielsweise beide Fügebereiche jeweils mittels einer Klemmverbindung mit der Fügehilfe verbunden werden. Denkbar ist auch hier die Verwendung von Öffnungen oder Bohrungen in der Fügehilfe und korrespondierenden Öffnungen oder Bohrungen in den Fügebereichen, um beide Flächenteile beispielsweise mittels einer Nietverbindung oder Schraubverbindung mechanisch mit der Fügehilfe zu verbinden. Als besonders vorteilhaft hat sich eine Anordnung der Flächenteile derart ergeben, dass zwischen den gegenüberliegenden Fügebereichen ein Abstand oder Spalt vorgesehen ist, durch die ein Verbindungsmittel, wie beispielsweise eine Schraube oder eine Niete in eine dafür vorgesehene Öffnung oder Bohrung in der Fügehilfe eingebracht werden kann, wobei der Kopf des Verbindungsmittels eine Fixierung des oder der Fügebereiche im Hinblick auf die Fügehilfe ermöglicht, ohne dass in dem Flächenteil eine Öffnung oder Bohrung vorgesehen werden muss. In allen Ausführungsformen wird bei dem Einsatz einer mechanischen Fügestelle möglicherweise austretender Klebstoff vorzugsweise entfernt.

In einem folgenden Schritt kann der Klebstoff vorzugsweise ausgehärtet werden. Dies kann je nach Klebstoffart beispielsweise durch Wärmezufuhr erfolgen, durch das Abdampfen eines Lösungsmittels oder auch durch eine chemische Reaktion insbesondere bei der Verwendung eines mehrkomponentigen Klebstoffes. Bei der Verwendung von Schrauben oder ähnlichen Verbindungsmitteln für die mechanische Fügestelle ist es denkbar, diese nach dem Aushärten des Klebstoffes zu entfernen. Denkbar ist alternativ hierzu eine Überdeckung von verbleibenden Verbindungsmitteln, wie beispielsweise Nieten mittels einer Versiegelungsmasse vorzusehen. Hierfür kann beispielsweise ein sich eignender Karosserieklebstoff zum Einsatz kommen. Auch kann zu diesem Zeitpunkt vorzugsweise eine Reinigung der Fügestelle erfolgen und/oder eine Ausrüstung mit einem Korrosionsschutzmittel.

In einem weiteren Schritt wird die Mulde mit einer Füllmasse ausgefüllt, um einen Niveauausgleich zu dem Niveau der Außenseite der benachbarten Bereiche der jeweiligen Flächenteile zu ermöglichen. Dies muss nicht zwangsläufig erst nach einer vollständigen Aushärtung des oben genannten Klebstoffes erfolgen. Der Klebstoff ist vorzugsweise derart an- oder ausgehärtet, dass eine sichere Verbindung und Fixierung der zu verbindenden Bauteile ermöglicht werden kann. Eine vollständige Aushärtung im Sinne einer Durchhärtung kann jedoch auch noch erfolgen, wenn bereits die Mulde mit der Füllmasse ausgefüllt wird oder zusammen mit der Aushärtung der in der Mulde befindlichen Füllmasse. Vorzugsweise kommt als Füllmasse eine Karosseriefüllmasse, insbesondere ein zweikomponentiges Epoxydharzsystem, vorzugsweise mit leicht expansiven Eigenschaften zum Einsatz. Im Anschluss kann die Aushärtung der Füllmasse erfolgen, die je nach Art der Füllmasse beispielsweise mittels Wärmeeinwirkung erfolgen kann. Vorzugsweise kommt dabei eine Heizvorrichtung zum Einsatz, welche derart gestaltet ist, dass sie sich der Kontur der Außenseite anpassen kann. Denkbar ist hierbei insbesondere ein Heizkissen. Andere Möglichkeiten sind insbesondere der Einsatz eines Heizstrahlers oder eines Infrarotstrahlers.

Abschließend kann die äußere Oberfläche, also die Außenseite der Flächenteile und die Oberfläche der ausgehärteten Füllmasse, bearbeitet und insbesondere lackiert werden.

Durch ein derartiges Verfahren kann eine verbesserte Möglichkeit zum Fügen von metallischen Flächen bereitgestellt werden, wobei insbesondere durch den Einsatz von Absetzungen ein tiefer liegender Bereich in Form besagter Mulde bereitgestellt werden kann, um ausreichend Raum und insbesondere Tiefe für die Füllmasse zu schaffen, wodurch die Sichtbarkeit der Naht verringert werden kann. Zudem ist insbesondere bei entsprechender Nachbearbeitung der oben genannten äußeren Oberfläche eine weitere Verringerung der Sichtbarkeit der Naht denkbar.

Darüber hinaus hat es sich also als besonders vorteilhaft herausgestellt, die äußere Oberfläche, also die Außenseite der Flächenteile und die Oberfläche der insbesondere ausgehärteten Füllmasse, zu bearbeiten, insbesondere durch sich eignende Schleif- und/oder Polierverfahren, um eine glatte und/oder ebene Oberfläche zu erhalten.

Ferner ist es von Vorteil, die Oberfläche insbesondere nach einem vorab beschriebenen Bearbeitungsschritt zu lackieren, was in einem dem Fachmann bekannten mehrstufigen Verfahren erfolgen kann.

In einer vorteilhaften Weiterbildung des Verfahrens kommt zumindest ein metallisches Flächenteil zum Einsatz, wobei dessen Fügebereich stirnseitig im Bereich der Absetzung vor der Benetzung durch einen Klebstoff durch ein Kaltumformverfahren bearbeitet wird. Hierbei ist insbesondere der Bereich um die freie Kante des besagten Fügebereichs zu verstehen. Hierdurch kann beispielsweise eine Erhöhung der Festigkeit des bearbeiteten Fügebereichs und/oder eine Verringerung der Duktilität erreicht werden. Dies kann beispielsweise durch ein Dengeln dieses Bereichs erfolgen, wodurch insbesondere die Schärfe besagter Kante gebrochen und/oder der gesamte bearbeitete Bereich verdichtet werden kann. Die durch das Kaltumformen entstehende verdichtete Struktur der Oberfläche kann in ihrer Art unregelmäßig und wellig sein. Die so hergestellte Oberfläche kann verhindern, dass sich solide Partikel des Klebstoffes und/oder der Füllmasse an einer geraden scharfen Kante ausrichten. Zudem kann durch die unregelmäßige Anordnung die Gefahr der späteren Sichtbarkeit der Kante weiter reduziert werden. Selbstverständlich sind auch andere, dem Fachmann bekannte und sich für diesen Zweck eignende Kalt- oder auch Warmumformverfahren einsetzbar, sofern sie zu demselben Resultat führen.

Besonders vorteilhaft ist dabei der Einsatz von zwei metallischen Flächenteilen, wobei beide Fügebereiche stirnseitig im Bereich der Absetzung vor der Benetzung durch einen Klebstoff durch ein Kaltumformverfahren, insbesondere wie oberhalb ausführlich beschrieben bearbeitet werden.

In einer Variante kommen zwei metallische Flächenteile zum Einsatz, wobei lediglich ein Fügebereich stirnseitig im Bereich der Absetzung vor der Benetzung durch einen Klebstoff durch ein Kaltumformverfahren, insbesondere wie oberhalb ausführlich beschrieben, bearbeitet wird. Dies macht insbesondere bei Reparaturarbeiten Sinn, bei denen beispielsweise ein beschädigtes Teil eines Flächenteils abgetrennt wird, der Fügebereich des verbleibenden Flächenteils wie oberhalb beschrieben durch ein Kaltumformverfahren bearbeitet wird. Im Gegensatz zu der oberhalb beschrieben Variante wird aber das neue Flächenteil, welches als Austauschteil für den defekten Teil zum Einsatz nicht durch das Kaltumformverfahren bearbeitet, sondern wird direkt verarbeitet.

In einer vorteilhaften Weiterbildung werden die Mulde und die die Mulde definierenden Bereiche der Flächenteile sowie ggf. Teile der Fügehilfe und verbleibende Teile der mechanischen Fügestelle, wie beispielsweise Nieten oder Schrauben vorzugsweise nach dem Aushärten des Klebstoffes und vor dem Einbringen der Füllmasse mit einem Korrosionsschutz versehen. In einigen Fällen kann der Korrosionsschutz bereits bei nicht vollständig ausgehärtetem Klebstoff zum Einsatz kommen, was eine Zeitersparnis bringen kann. Als Korrosionsschutzmittel eignet sich beispielsweise eine Beschichtung, wie sie in der EP975439B1 offenbart ist, die insofern die hier vorliegende Offenbarung ergänzt. Derartige Beschichtungen können beispielsweise in Tüchern getränkt vorliegen und dienen so als schnelle und einfache Methode für die Vorbehandlung von Metallen.

Ein weiterer Vorteil ist die Ausrüstung der Fügehilfe und/oder zumindest eines Flächenteils an dem jeweiligen Fügebereich mit zumindest einer Öffnung, um einen Angriffsbereich für die mechanische Fügestelle bereitzustellen. Einerseits können dergleiche Öffnungen beispielsweise unmittelbar vor der Fügung beispielsweise gebohrt oder gestanzt werden. Andererseits ist es insbesondere für die Fügehilfe und/oder für Flächenteile, die als Ersatzteil zum Einsatz kommen, denkbar, derartige Teile mit vorgefertigten Öffnungen zu verwenden. Bevorzugt kommen eine Vielzahl von Öffnungen zum Einsatz, wobei der Abstand zwischen den Öffnungen eines Flächenteils und/oder der Fügehilfe, vorzugsweise der Abstand zwischen den einander nächstkommenden Rändern einander benachbarter Öffnungen im Bereich von 15mm bis 50mm liegt.

Ein weiterer Vorteil ist der Einsatz einer Absetzung zumindest eines Flächenteils, dessen Tiefe im Bereich zwischen der einfachen bis dreifachen Flächenteilstärke liegt.

Ein weiterer Vorteil ist der Einsatz einer Absetzung zumindest eines Flächenteils, deren Übergang an ihrer Absetzkante einen Radius im Bereich von 0,5 mm bis 6 mm aufweist. In einer Variante ist der Radius abhängig von der Stärke des Flächenteils, welches abgesetzt wird und liegt in einem Bereich zwischen der einfachen Stärke des Flächenteils bis zur sechsfachen Stärke des Flächenteils. Die Absetzkante beider bevorzugten Bereiche ist vorzugsweise die Kante, an der die Absetzung an dem Flächenteil beginnt und sich von dem ursprünglichen Niveau des Flächenteils absetzt.

In einer vorteilhaften Weiterbildung weist eine Absetzung zumindest eines Flächenteils lediglich eine Stufe oder alternativ mehrfache Stufen auf. Vorzugsweise liegt die Tiefe der Stufe in einem Bereich der einfachen bis zweifachen Stärke des entsprechenden Flächenteils.

In einer vorteilhaften Weiterbildung hat es sich darüber hinaus als zweckmäßig erwiesen, die Absetzung mit einer Schräge auszurüsten. Vorzugsweise weist die Schräge einen Winkel im Bereich von 1° bis 10° auf.

In einer bevorzugten Ausführungsform kommt ein mehrkomponentiger Klebstoff für die Verklebung der Flächenteile zum Einsatz. Der Vorteil mehrkomponentiger Klebstoffe ist die definierte Durchhärtung bei Ausreichender Vermischung der Komponenten.

Insbesondere eignet sich der Einsatz eines zweikomponentigen härtbaren Klebstoffes, wie sie insbesondere in der WO2011048022 beschrieben ist, die insofern die hier vorliegende Offenbarung ergänzt, enthaltend nach Mischen der beiden Komponenten:
a) mindestens ein Epoxid,
b) mindestens einen bei Raumtemperatur reaktiven Härter für das Epoxid,
c) Partikel mit Kern-Schale-Struktur,
d) mindestens einen aliphatischen Polyalkylenether, der an jedem Kettenende eine Aminogruppe trägt, dadurch gekennzeichnet, dass die Komponente
d) von der Komponente b) verschieden ist und ausgewählt ist aus Homo- oder Copolymeren von Tetrahydrofuran, die aliphatische Amino-Endgruppen tragen und die eine gewichtsmittlere Molmasse Mw von mindestens 1800, bezogen auf Polyethylenglycol- Standard, aufweist.

Besonders vorteilhaft hat sich dabei der Einsatz eines zweikomponentigen Klebstoffes auf Epoxidbasis erwiesen. Insbesondere für die Anwendung eines erfindungsgemäßen Verfahrens im Karosseriebereich hat sich der Einsatz eines mehrkomponentigen Karosserieklebstoffes als zweckmäßig erwiesen. Hierbei eignet sich beispielsweise ein zweikomponentiger Karosserieklebstoff, der als lösungsmittelfreier Hochleistungs-Klebstoff insbesondere bei der Karosseriereparatur zum Kleben von Karosserieteilen wie beispielsweise Dach- und Seitenwänden zum Einsatz kommt. Bei der Verwendung eines solchen oder ähnlichen Klebstoffes kann beispielsweise eine Klebung und gleichzeitig eine Abdichtung ohne den Einsatz eines Primers in einem Arbeitsgang ermöglicht werden.

In einer bevorzugten Ausführungsform kommt eine mehrkomponentige Füllmasse zum Einsatz. Besonders vorteilhaft hat sich dabei der Einsatz einer zweikomponentigen Füllmasse auf Epoxidbasis erwiesen. Vorzugsweise weist die Füllmasse leicht expansive Eigenschaften auf und/oder keinen oder zumindest lediglich einen geringen Schrumpf.

Insbesondere eignet sich der Einsatz eines zweikomponentigen Füllmasse, wie sie insbesondere in der EP167201 0A1 beschrieben ist, die insofern die hier vorliegende Offenbarung ergänzt, enthaltend einerseits eine Epoxy-Komponente enthaltend mindestens ein bei Raumtemperatur flüssiges Epoxidharz mit mindestens 2 Epoxygruppen pro Molekül, mindestens einem Reaktivverdünner, Füllstoffe und/oder Leichtfüllstoffe sowie Treibmittel und gegebenenfalls Pigmente aufweist, sowie andererseits. eine Härterkomponente enthaltend mindestens ein aliphatisches Polyaminoamid, mindestens ein Polyaminoaddukt auf der Basis von Triethylentetramin, Füllstoffe und/oder Leichtfüllstoffe sowie Treibmittel wobei das Verhältnis von Polyaminoamid zu Polyaminoaddukt 1,5:1 bis 3:1 ist aufweist.

Ein weiterer Vorteil ist der Einsatz des erfindungsgemäßen Verfahrens als Reparaturverfahren im Karosseriebereich, wobei eines der Flächenteile ein Teil der Karosserie ist und das andere Flächenteil ein Ersatzteil, welches mit der Karosserie verbunden wird.

Gegenstand der vorliegenden Erfindung ist zudem eine Fügestelle oder eines Verbindungsbereichs, die nach einem Verfahren des Anspruchs 1, insbesondere beinhaltend die vorhergehenden Merkmale, hergestellt worden ist.

Demnach ist ein weiterer Grundgedanke der vorliegenden Erfindung ist die Bereitstellung eines Verbindungsbereichs eines ersten und eines zweiten Flächenteils mit jeweils einer Außenseite und einer Innenseite insbesondere mittels des oberhalb beschriebenen Verfahrens, wobei beide Flächenteile an Fügebereichen Absetzungen aufweisen, wobei die Flächenteile derart positioniert sind, dass die beiden Absetzungen eine Mulde bilden, wobei entweder einer der Fügebereiche den jeweils anderen Fügebereich überlappt und wobei ein Klebstoff direkt zwischen den überlappenden Fügebereichen vorgesehen ist oder wobei eine Fügehilfe zum Einsatz kommt, die jeweils die Fügebereiche der Flächenteile zumindest teilweise überlappt, wobei der Klebstoff jeweils zwischen den Fügebereichen beider Flächenteile und der Fügehilfe vorgesehen ist; wobei die Mulde mit einer Füllmasse ausgefüllt ist.

Dabei ist es einerseits denkbar, dass der Verbindungsbereich noch Teile einer mechanischen Fügestelle wie oberhalb beschrieben aufweist, insbesondere eine Öffnung oder Bohrung in einem oder beiden Flächenteilen und/oder der Fügehilfe. Andererseits kann der Verbindungsbereich auch noch eine vollständige mechanische Fügestelle aufweisen, wobei der in der Mulde liegende Teil der mechanischen Fügestelle vorzugsweise mittels des Füllmaterials abgedeckt wird.

Insbesondere kann der Verbindungsbereich alle Merkmale aufweisen, die beim obigen Verfahren erwähnt werden.

Die Erfindung wird im Folgenden anhand einiger Ausführungsbeispiele beschrieben Dabei zeigt
Figur 1 eine geschnittene Ansicht eines Aufbaus bestehend aus einem ersten und einem zweiten Flächenteil während des Fügens mittels des erfindungsgemäßen Verfahrens,
Figur 2 eine geschnittene Ansicht eines Details des Aufbaus von Figur 1 in einem weiteren Verfahrensschritt,
Figur 3 eine geschnittene Seitenansicht des Aufbaus aus Figur 1 nach Abschluss des Verfahrens,
Figur 4 eine geschnittene Seitenansicht einer Variante eines Aufbaus nach Abschluss des Verfahrens,
Figur 5 eine geschnittene Seitenansicht einer weiteren Variante eines Aufbaus nach Abschluss des Verfahrens,
Figur 6 eine geschnittene Seitenansicht einer dritten Variante eines Aufbaus nach Abschluss des Verfahrens.

Grundsätzlich kann das erfindungsgemäße Verfahren allgemein zum Fügen von Flächen, insbesondere aus Blech zur Anwendung kommen. In den gezeigten Ausführungsbeispielen kommt das erfindungsgemäße Verfahren beispielhaft als Reparaturverfahren für Karosserien von Kraftfahrzeugen zum Einsatz. Gezeigt wird jeweils eine Teilansicht einer Fahrzeugkarosserie, bei der ein beispielsweise durch einen Unfall beschädigtes Teil bereits von der restlichen, vorzugsweise unbeschädigten Karosserie abgetrennt worden ist, um für das beschädigte Teil ein Ersatzteil einsetzen und mit der Karosserie verbinden zu können. Da im gezeigten Ausführungsbeispiel eine Karosserie aus Stahlblech bearbeitet wird, ist das unbeschädigte Karosserieteil als Karosserieblech 10 gekennzeichnet, dass Ersatzteil wiederum als Austauschblech 20. Gleichwohl ist der Einsatz eines erfindungsgemäßen Verfahrens auch bei anderen Werkstoffen denkbar, insbesondere Leichtmetalle, Kunststoffe oder Verbundwerkstoffe.

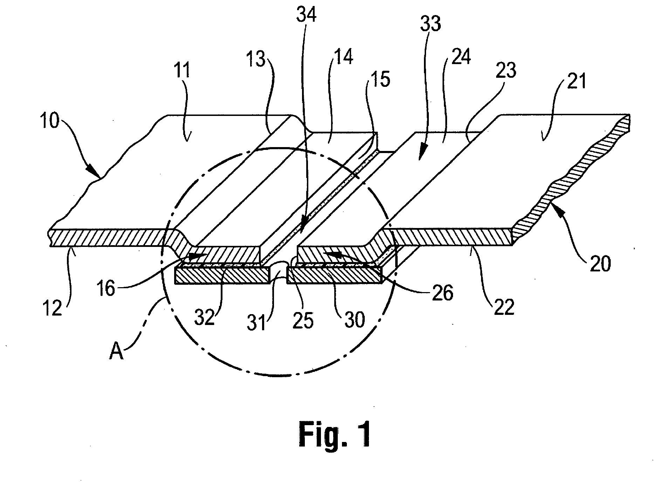

Figur 1 zeigt eine geschnittene Ansicht eines Aufbaus bestehend aus einem Karosserieblech 10 als erstes Flächenteil und eines Austauschblechs 20 als zweites Flächenteil während des Fügens mittels des erfindungsgemäßen Verfahrens. Demnach ist das erfindungsgemäße Verfahren noch nicht abgeschlossen. Wie oberhalb beschrieben ist ein defektes Flächenteil von dem Karosserieblech 10 abgetrennt und entfernt worden, so dass das Karosserieblech 10 eine freie Kante 15 aufweist. Ein Ersatz für das defekte Flächenteil soll das Austauschteil 20 darstellen, welches mittels des erfindungsgemäßen Verfahrens mit dem Karosserieblech 10 verbunden werden soll. Das Karosserieblech 10 weist eine Außenseite 11 auf sowie eine Innenseite 12 auf. Entsprechend weist das Austauschteil 20 eine Außenseite 21 sowie eine Innenseite 22 auf. Ursprünglich war die Außenseite 11 mit einer nicht dargestellten Oberflächenschicht, insbesondere beinhaltend eine Lackierung versehen, selbige wurde bereits von dem gezeigten Teil des Karosserieblechs 10 entfernt.

Das Karosserieblech 10 weist eine Absetzung 14 auf, welche sich von einer Absetzkante 13 in Richtung der freien Kante 15 erstreckt. Nach dem Abtrennen des beschädigten Teils ist hier das Karosserieblech 10 in einem Verfahrensschritt mittels einer Absetzzange derart abgesetzt worden, dass das Niveau der Außenseite 11 im Bereich dieser Absetzung 14 unter dem Niveau der Außenseite 11 der benachbarten Bereichen, also des ursprünglichen Niveaus des Karosserieteils 10 liegt. Die Absetzkante 13 weist dabei einen Radius von 1mm auf, die Tiefe der Absetzung 14 beträgt vorzugsweise mindestens der einfachen Stärke des Karosseriebleches 10, im vorliegenden Ausführungsbeispiel ungefähr die einfache Stärke. Ferner ist der stirnseitige, in Richtung freier Kante 15 liegende Bereich des Karosseriebleches 10 durch ein Kaltumformverfahren bearbeitet worden. Im gezeigten Ausführungsbeispiel ist dieser Bereich gedengelt worden, um eine Erhöhung der Festigkeit dieses Bereichs und/oder eine Verringerung der Duktilität zu erreichen und um die Schärfe der freien Kante 15 zu brechen.

Das Austauschblech 20 wiederum weist ebenfalls eine feie Kante 25 auf, welche sich korrespondierend zu der freien Kante 15 des Karosserieblechs 10 erstreckt und in der dargestellten Lage des Austauschsblechs 10 der freien Kante 15 gegenüberliegt. Unter einer korrespondierenden Erstreckung ist dabei vorzugsweise ein derartiger Verlauf oder eine derartige Form zu verstehen, dass beide Kanten 15, 25 in der gezeigten Lage sich vorzugsweise über Ihre gesamte Länge in einem mehr oder weniger konstanten Abstand zueinander erstrecken, so dass aufgrund der dargestellten bereichsweise beabstandeten Anordnung von Karosserieblech 10 und Austauschblech 20 zueinander ein regelmäßiger Spalt 34 zwischen den beiden freien Kanten 15, 25 vorliegt.

Ferner weist das Austauschblech 20 eine Absetzung 24 auf, welcher sich von einer Absetzkante 23 in Richtung der freien Kante 25 erstreckt. Nach dem das Austauschblech 20 in passender Größe von einem nicht gezeigten Blechvorrat abgetrennt worden ist, ist hier das Austauschblech 20 in einem Verfahrensschritt mittels einer Absetzzange derart abgesetzt worden, dass das Niveau der Außenseite 21 im Bereich dieser Absetzung 24 unter dem Niveau der Außenseite 21 der benachbarten Bereichen, also des ursprünglichen Niveaus des Karosserieteils 20 liegt. Die Absetzkante 23 weist auch hier einen Radius von 1mm auf, die Tiefe der Absetzung 24 beträgt vorzugsweise mindestens die einfache Stärke des Austauschbleches 20, im vorliegenden Ausführungsbeispiel ungefähr die einfache Stärke. Gleichwohl ist es ebenfalls denkbar, ein Austauschblech 20 einzusetzen, das werkseitig bereits in einer bevorzugten Größe vorliegt und darüber hinaus die beschrieben Absetzung 24 bereits werksseitig aufweist. In diesem Fall ist ein aktives Einbringen einer Absetzung 24 in das Austauschblech 20 zu diesem Zeitpunkt nicht notwendig. Auch beim Austauschblech 20 ist der stirnseitige, in Richtung freier Kante 25 liegende Bereich durch ein Kaltumformverfahren bearbeitet worden. Auch hier ist dieser Bereich vorzugsweise gedengelt worden, um eine Erhöhung der Festigkeit dieses Bereichs und/oder eine Verringerung der Duktilität zu erreichen und um die Schärfe der freien Kante 25 zu brechen. Auch dieser Schritt muss nicht zwangsläufig unmittelbar vor dem Einsatz des Austauschbleches 20 erfolgen, sondern kann beispielsweise werkseitig bei der Herstellung eines Austauschbleches 20 als Standardersatzteil erfolgen.

Wie in Figur 1 gezeigt und oberhalb angesprochen, sind Karosserieblech 10 und Austauschblech 20 derart zueinander positioniert, dass zwischen den freien Kanten 15, 25 ein Spalt 34 vorgesehen ist. Zudem bilden die Absetzungen 14, 24 zusammen eine Mulde 33, deren Bestandteil auch der Spalt 34 sein kann, sofern er nicht durch ein in Figur 1 nicht dargestelltes Verbindungsmittel ausgefüllt ist. Die gezeigte Positionierung des Karosseriebleches 10 und des Austauschbleches 20 erfolgt unter Verwendung eines Klebstoffes 32 und eines Verbindungsschuhs 30 als Fügehilfe. Bei dem Verbindungsschuh 30 handelt es sich im vorliegenden Ausführungsbeispiel um ein Flächenteil aus Blech, welches derart bemessen ist, dass es in der gezeigten Lage des Karosseriebleches 10 und des Austauschbleches 20 zueinander in etwa so groß ist, wie die Gesamtfläche der beiden Absetzungen 14, 24 zusammen sowie dem Spalt 34. Der Verbindungsschuh 30 kommt auf den Innenseiten 12, 22 im Bereich der Absetzungen 14, 24 des Karosseriebleches 10 bzw. des Austauschbleches 20 zur Anlage, wobei zwischen dem Verbindungsschuh 30 und den Innenseiten 12, 22 eine Schicht Klebstoff 32 vorgesehen ist. Daher wird der Bereich der Absetzungen 14 des Karosseriebleches 10 auch als Fügebereich 16 des Karosseriebleches 10, der Bereich der Absetzung 24 des Austauschbleches 20 auch als Fügebereich 26 des Austauschbleches 20 gekennzeichnet. Vor der Benetzung mit Klebstoff kann es sich als zweckmäßig erweisen, das Karosserieblech 10 und/oder das Austauschblech 20 und/oder den Verbindungsschuh 30 zumindest an den Bereichen, die mit dem Klebstoff 32 in Kontakt treten anzuschleifen und von vorhandenen Beschichtungen zu befreien und/oder zu reinigen und/oder zu entfetten.

Als Klebstoff 32 kommt ein zweikomponentiger Karosserieklebstoff auf Epoxidbasis zum Einsatz, wie er insbesondere in der WO2011048022 beschrieben ist. Der Klebstoff wurde dabei vor der Platzierung des Verbindungsschuhs 30 auf die Oberfläche des Verbindungsschuhs 30 aufgebracht. Somit kommt als Fügehilfe wie beschrieben der Verbindungsschuh 30 zum Einsatz, der jeweils die Fügebereiche 16, 26 des Karosseriebleches 10 bzw. Des Austauschbleches 20 zumindest teilweise überlappt, wobei der Klebstoff 32 in der gezeigten Positionierung jeweils zwischen den Fügebereiche 16, 26 und dem Verbindungsschuh 30 vorgesehen ist.

Da eine Aushärtung des Klebstoffes 32 zur Fixierung der Lage von Karosserieblech 10 und Austauschblech 20 zueinander von Nöten ist, sieht das erfindungsgemäße Verfahren das Vorsehen einer mechanischen Fügestelle zur Bereitstellung einer Montageverbindung vor. Hierfür ist der Verbindungsschuh 30 im vorliegenden Ausführungsbeispiel mit einer Vielzahl an Bohrungen 31 ausgestattet, um einen Angriffsbereich für ein mechanisches Verbindungsmittel, also für die mechanische Fügestelle bereitzustellen. Die Bohrungen 31 sind derart angeordnet, dass sie in der gezeigten Positionierung der Bauteile zueinander innerhalb des Spaltes 34 zwischen den freien Kanten 15, 25 liegen und durch den Spalt 34 zugänglich sind. Dabei sind der Spalt 34 und/oder die Bohrungen 31 vorzugsweise derart zu gestaltet, dass der Spalt geringfügig größer ist, als der Durchmesser der Bohrungen 31, vorzugsweise derart, dass jede Bohrung 31 frei durch den Spalt 34 mittels eines mechanischen Verbindungsmittels zugänglich ist. Der Abstand der einzelnen Bohrungen 31 zueinander beträgt im gezeigten Ausführungsbeispiel 35mm und liegt allgemein für die Durchführung des erfindungsgemäßen Verfahrens vorzugsweise im Bereich von 15mm bis 50mm.

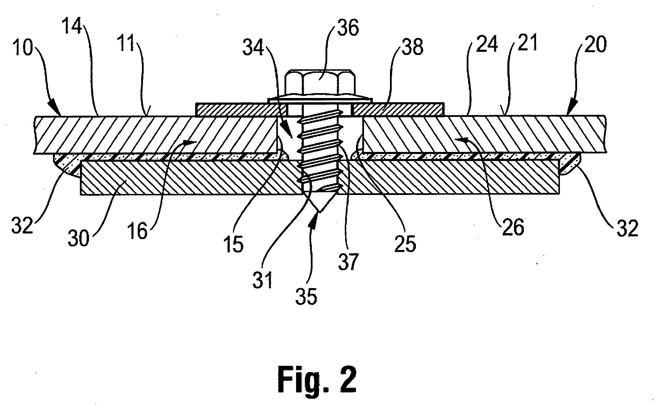

Figur 2 zeigt eine geschnittene Ansicht eines Details A des Aufbaus von Figur 1 in einem weiteren Verfahrensschritt. Hierbei ist der Verbindungsschuh 30 jedoch etwas schmaler dargestellt worden, als in Figur 1. Nach der Positionierung des Karosseriebleches 10 und des Austauschbleches 20 in der gewünschten Lage zueinander und dem Anlegen des Verbindungsschuhs 30 mit dem Klebstoff 32 kommt als Verbindungsmittel für die mechanische Fügestelle eine Blechtreibschraube 35 zum Einsatz. Dabei ist die Größe der Blechtreibschraube 35 derart gewählt, dass ein an der Blechtreibschraube 35 vorgesehenes Außengewinde 37 die freien Kanten 15, 25 im Bereich es Spaltes 34 nicht berührt, jedoch in die Wandung einer Bohrung 31 des Verbindungsschuhs 30 einschneidet. Auf diese Weise kann auf eine Ausrüstung der Bohrung 31 mit einem Innengewinde verzichtet werden. Vor dem Eindrehen der Blechtreibschraube 35 ist eine Unterlegscheibe 38 vorgesehen worden, die derart bemessen ist, dass ein Schraubenkopf 36 die Unterlegscheibe 38 beim Eindrehen der Blechtreibschraube 35 auf die Außenseiten 11, 21 beider Absetzungen 14, 24 drückt, um die Innenseite an den Fügebereichen 16, 26 des Karosseriebleches 10 und des Austauschbleches 20 und den Verbindungsschuh 30 mit dem Klebstoff 32 zur Bereitstellung einer Montageverbindung zusammenzudrücken, insbesondere um eine Aushärtung des Klebstoffes 32 und eine sichere stoffschlüssige Verbindung der Teile zueinander mittels des Klebstoffes 32 ermöglichen zu können. Beim Eindrehen der Blechtreibschrauben 35 möglicherweise austretender Klebstoff 32 ist vorzugsweise abzuwischen. Anstelle der Unterlegscheibe 38 können auch andere sich eignende Kraftübertragungsmittel zum Einsatz kommen, insbesondere sich eignende Bügel oder brückenförmige Bauteile. Anschließend wird der Klebstoff 32 ausgehärtet, wobei sich der Einsatz beispielsweise eines Infrarotstrahlers oder eines entsprechenden Heizkissens zur Erwärmung des Aufbaus als sinnvoll erweisen kann.

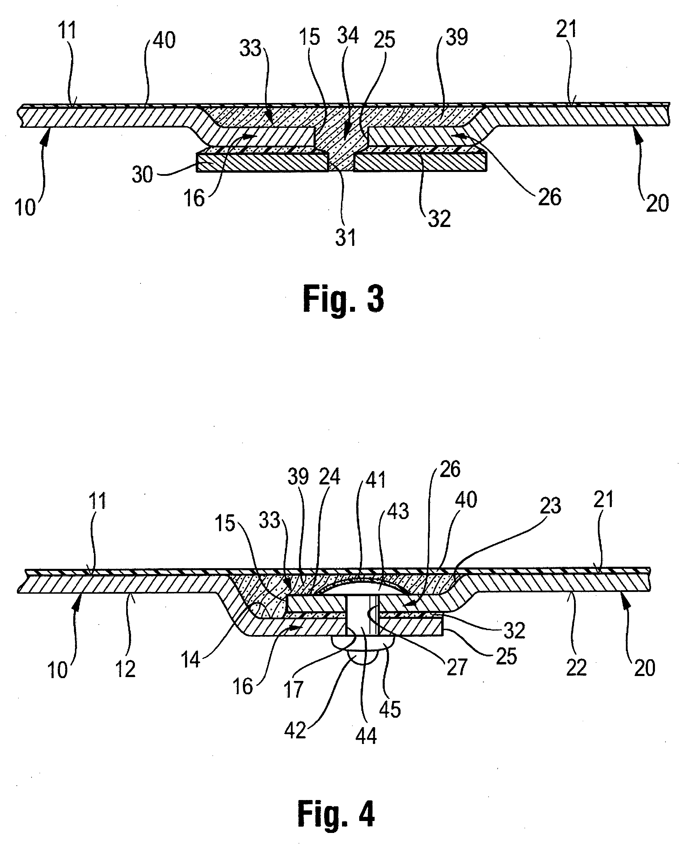

Figur 3 zeigt eine geschnittene Seitenansicht des Aufbaus aus Figur 1 nach Abschluss des erfindungsgemäßen Verfahrens, also einen erfindungsgemäßen Verbindungsbereich. Nach dem Aushärten des Klebstoffes 32 ist die in Figur 2 gezeigte Blechtreibschraube 35 und die Unterlegscheibe 38 entfernt worden. Ferner ist die Bohrung 31 und der Spalt 34 von Resten an Klebstoff 32 befreit worden. Im Anschluss ist die Außenseite 11, 21 insbesondere im Bereich der Fügebereiche 16, 26 sowie die freien Kanten 15, 25 am Spalt 34 mit einem Korrosionsschutz behandelt worden. Hierfür eignet sich beispielsweise eine Beschichtung eignen, wie sie in der EP975439B1 offenbart ist, die insofern die hier vorliegende Offenbarung ergänzt. Derartige Beschichtungen können beispielsweise in Tüchern getränkt vorliegen und dienen so als schnelle und einfache Methode für die Vorbehandlung von Metallen. Die Tücher machen die Vorbehandlung einfacher und sorgen so für schnellere Durchlaufzeiten. Die Mulde 33, der Spalt 34 und vorzugsweise auch die Bohrungen 31 werden im Anschluss unter Verwendung einer Füllmasse 39 luftfrei ausgefüllt, um einen Niveauausgleich insbesondere der Mulde 33 zu dem Niveau der Außenseite 11, 21 der benachbarten Bereiche hinsichtlich der Absetzungen 14, 24 des Karosseriebleches 10 und des Austauschbleches 20 zu ermöglichen. Beispielsweise eignet sich eine Füllmasse 39, die als Karosseriefüllmasse zur Reparatur von Karosserieschäden zum Einsatz kommt und die insbesondere in der EP1672010A1 beschrieben ist. Das Produkt kann bei Raumtemperatur verarbeitet und anschließend mit einer Infrarotwärmequelle bei vorzugsweise 60 bis 80 Grad Celsius ausgehärtet werden. Als Aushärtung der Füllmasse 39 hat sich der Einsatz beispielsweise einer Wärmequelle zur Erwärmung des Aufbaus als sinnvoll erwiesen, wobei im gezeigten Ausführungsbeispiel ein nicht gezeigtes Heizkissen zum Einsatz gekommen ist, welches sich der Kontur des Aufbaus anpassen kann, die notwendige Härtungstemperatur für die benötigte Aushärtedauer zur Verfügung stellt und seine Wärme in Richtung der Blechteile 10, 20 abgibt, so dass die Umgebung nicht signifikant erwärmt wird. Dies hat sich als besonders vorteilhaft erwiesen, da durch das Abdecken der Füllmasse 39 während des Härteprozesses gegen mechanische und andere Einflüsse geschützt ist. Alternativ kann zur Aushärtung der Füllmasse 39 auch einen andere Wärmequelle genutzt werden, wie beispielsweise ein Heiz- oder Infrarotstrahler.

Nach der Aushärtung der Füllmasse 39 sind die äußere Oberfläche der Füllmasse 39 und die benachbarten Bereiche der Außenseiten 11, 21 im gezeigten Ausführungsbeispiel bereits bearbeitet und insbesondere lackiert worden, was eine Oberflächenschicht 40 zur Folge hat. Hierbei kommen übliche Arbeitsschritte zum Einsatz, wie beispielsweise das Schleifen, Spachteln, Füllern, Grundieren, Lackieren mit einem Basislack und das Lackieren mit einem Klarlack.

Figur 4 zeigt eine geschnittene Seitenansicht einer Variante eines Aufbaus nach Abschluss des erfindungsgemäßen Verfahrens, also einen alternativen erfindungsgemäßen Verbindungsbereich. Das hier zur Anwendung kommende Verfahren ist grundsätzlich mit dem Verfahren vergleichbar, welches zu dem mit Figur 3 gezeigten Aufbau geführt hat. So sind auch hier das Karosserieteil 10 als erstes Flächenteil und das Austauschteil 20 als zweites Flächenteil miteinander verbunden oder gefügt worden. Sowohl das Karosserieteil 10, als auch das Austauschteil 20 sind zudem mit Absetzungen 14, 24 versehen worden, wobei der Radius der Absetzung an den jeweiligen Absetzkanten 13, 23 jeweils 2mm beträgt, so dass das Niveau der Außenseiten 11, 21 im Bereich dieser Absetzungen 14, 24 unter dem Niveau der Außenseite 11, 21 der benachbarten Bereiche der jeweiligen Flächenteile liegt. Dabei ist zu beobachten, dass die Absetzung 14 des Karosserieteils 10 ungefähr eine Tiefe der zweifachen Stärke des Karosseriebleches 10 aufweist, die Absetzung 24 des Austauschteils 20 wiederum lediglich eine Tiefe von ungefähr der einfachen Stärke des Austauschbleches 20. Sowohl Karosserieblech 10, als auch Austauschblech 20 weisen dabei die gleiche Stärke auf. Die unterschiedliche Tiefe der Aussparungen 14, 24 erklärt sich in der abgebildeten Positionierung des Karosseriebleches 10 und des Austauschbleches 20 zueinander. Beide Bleche 10, 20 überlappen einander derart, dass der Fügebereich 26 des Austauschbleches 20 mit der Innenseite 22 auf der Außenseite 11 des Fügebereichs 16 des Karosseriebleches 10 liegt, so dass auch hier beide Absetzungen 14, 24 eine Mulde 33 bilden. Zur stoffschlüssigen Verbindung beider Bleche 10, 20 ist im Zwischenraum zwischen den überlappenden Fügebereichen 16, 26 der Klebstoff 32, auch hier vorzugsweise oberhalb beschriebener zweikomponentiger Karosserieklebstoff auf Epoxidbasis, vorgesehen. Im Gegensatz zu dem Ausführungsbeispiel aus den Figuren 1 bis 3 kommt hier demnach kein Verbindungsschuh als Fügehilfe zum Einsatz.

Die entsprechenden stirnseitigen, in Richtung der jeweiligen freien Kanten 15, 25 liegenden Bereiche der jeweiligen Fügebereiche 16, 26 des Karosseriebleches 10 und des Austauschbleches 20 wurden ferner, vorzugsweise nach dem Absetzen und nach der abgebildeten Positionierung unter Einsatz des Klebstoffes 32 durch ein Kaltumformverfahren, nämlich durch Dengeln bearbeitet. Ferner sind die beiden Fügebereiche 16, 26 mit in der abgebildeten Lage einander korrespondierenden Bohrungen 17, 27 ausgestattet worden. Darunter sind Bohrungen 17, 27 vorzugsweise gleichen Durchmessers zu verstehen, die im gezeigten Überlappungszustand der Fügebereiche 16, 26 konzentrisch zueinander angeordnet sind. Dabei sind jeweils eine Vielzahl von Bohrungen 17, 27 vorgesehen, vorzugsweise im Abstand von jeweils 20mm einer Bohrung 17, 27 zur jeweils nächsten desselben Bleches 10, 20. Die Bohrungen 17, 27 dienen zur Bereitstellung einer mechanische Fügestelle im Bereich der Mulde 33 zur Bereitstellung einer Montageverbindung für die Aushärtung des Klebstoffes 32, wobei im gezeigten Ausführungsbeispiel ein Niet 42 zur Anwendung kommt. Der Niet 42 verläuft dabei mit einem Nietschaft 44 durch die Bohrung 27, des Austauschbleches 20 und die Bohrung 17 des darunter liegenden Karosseriebleches 10, wobei ein Setzkopf 43 des Niets 42 auf der Außenseite 21 des Fügebereichs 26 des Austauschbleches 20 aufliegt und ein Schließkopf 45 auf der Innenseite 12 des Fügebereichs 16 des Karosseriebleches 10. Der Niet 42 drückt die überlappenden Fügebereiche 16, 26 zusammen, insbesondere um eine Aushärtung des Klebstoffes 32 und eine sichere stoffschlüssige Verbindung der Bleche 10, 20 zueinander mittels des Klebstoffes 32 ermöglichen zu können. Beim Befestigen des Niets 42 möglicherweise austretender Klebstoff 32 ist vorzugsweise abzuwischen. Im Folgenden ist der Klebstoff 32 wie oberhalb beschrieben ausgehärtet worden.

Ein weiter Unterschied zu dem oberhalb beschrieben Ausführungsbeispiel ist, dass der Niet 42 insbesondere nicht nach der Aushärtung des Klebstoffes 32 nicht aus den Bohrungen 17, 27 entfernt worden ist. Vielmehr sind vorzugsweise unmittelbar nach dem Befestigen der Setzkopf 43 und die unmittelbar angrenzenden Bereiche der Außenseite 21 des Fügebereichs 26 mit einem Klebstoff 41 versehen worden, insbesondere um einen Korrosionsschutz bereitstellen zu können. Hier kann auch wieder der oberhalb beschriebene zweikomponentige Karosserieklebstoff auf Epoxidbasis zum Einsatz kommen, so dass vorzugsweise der Klebstoff 32 und der Klebstoff 41 zusammen ausgehärtet werden können. Nach dem Aushärten der Klebstoffe 32, 41 ist die Außenseite 11, 21 insbesondere im Bereich der Fügebereiche 16 mit einem Korrosionsschutz behandelt worden, beispielsweise mit einer Beschichtung, wie Sie in der EP975439B1 offenbart ist. Die Mulde 33 ist ferner im Anschluss unter Verwendung der oberhalb beschriebenen Füllmasse 39 luftfrei ausgefüllt, um einen Niveauausgleich insbesondere der Mulde 33 zu dem Niveau der Außenseite 11, 21 der benachbarten Bereiche des Karosseriebleches 10 und des Austauschbleches 20 zu ermöglichen. Nach der Aushärtung der Füllmasse 39 sind die äußere Oberfläche der Füllmasse 39 und die benachbarten Bereiche der Außenseiten 11, 21 wie oberhalb beschrieben bearbeitet und insbesondere lackiert worden, was eine Oberflächenschicht 40 zur Folge hat.

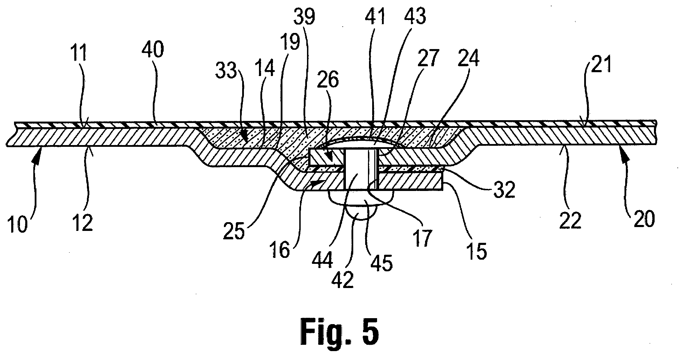

Figur 5 zeigt eine geschnittene Seitenansicht einer weiteren Variante eines Aufbaus nach Abschluss des erfindungsgemäßen Verfahrens, also einen alternativen erfindungsgemäßen Verbindungsbereich. Grundsätzlich entspricht das Verfahren zur Herstellung des dargestellten Aufbaus aus Karosserieblech 10 und Austauschblech 20 dem Verfahren des Aufbaus aus Figur 4, so dass hier auf die obige Beschreibung Bezug genommen wird, die insofern die Beschreibung des mit Figur 5 dargestellten Ausführungsbeispiels ergänzt. Ein Unterschied ist jedoch die Ausgestaltung der Absetzung 14 des Karosseriebleches 10, welche eine Stufe 19 aufweist, so dass die Absetzung 14 in zwei Bereiche unterschiedlicher Tiefe unterteilt ist. Der vordere Bereich mündet in der freien Kante 15 und hat eine Tiefe, die der zweifachen Stärke des Karosseriebleches 10 entspricht. Dieser Bereich stellt den Fügebereich 16 des Karosseriebleches 10 dar, auf dessen Außenseite 11 der Fügebereich 26 des Austauschbleches 20 in der gezeigten Lage positioniert ist, wobei auch hier wieder ein Klebstoff 32 zwischen den Fügebereichen 16, 26 vorgesehen ist. In diesem ersten Bereich der Absetzung 14 überlappen demnach die Fügebereiche 16, 26. Auf der von der freien Kante 15 abgewandten Seite endet besagter erste Bereich der Absetzung 14 in der Stufe 19 und geht in einen zweiten Bereich über, der, genau wie die Absetzung 24 des Austauschbleches 20, lediglich eine Tiefe aufweist, die der einfachen Stärke des Karosseriebleches 10 entspricht. Sowohl Karosserieblech 10, als auch Austauschblech 20 weisen dabei die gleiche Stärke auf. Die Außenseite 21 des Fügebereichs 26 des Austauschbleches 20 liegt demnach in etwa in einer Ebene mit der Außenseite 11 des Fügebereichs 16 des zweiten Bereichs der Absetzung 14 des Karosseriebleches 10. So kann beispielsweise eine gleichmäßige Stärke der Füllmasse 39 ermöglicht werden. Nach Abschluss des Verfahrens sind auch hier äußere Oberfläche der Füllmasse 39 und die benachbarten Bereiche der Außenseiten 11, 21 wie oberhalb beschrieben bearbeitet und insbesondere lackiert worden, was in einer Oberflächenschicht 40 resultiert.

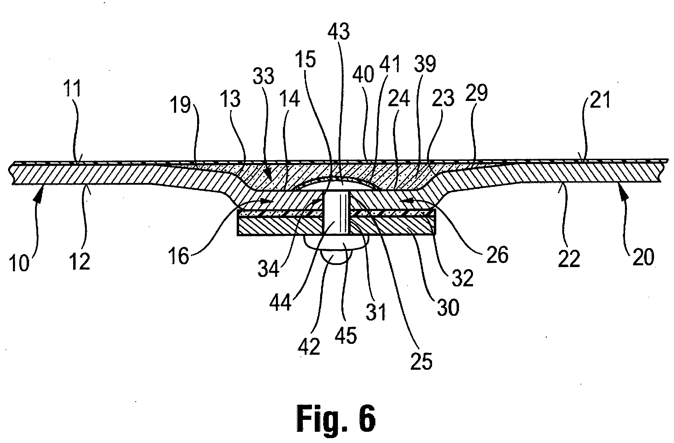

Figur 6 zeigt eine geschnittene Seitenansicht einer dritten Variante eines Aufbaus nach Abschluss des erfindungsgemäßen Verfahrens, also einen alternativen erfindungsgemäßen Verbindungsbereich. Grundsätzlich entspricht das Verfahren zur Herstellung des dargestellten Aufbaus aus Karosserieblech 10 und Austauschblech 20 dem Verfahren des Aufbaus aus den Figuren 1 bis 3, so dass hier auf die obige Beschreibung Bezug genommen wird, die insofern die Beschreibung des mit Figur 6 dargestellten Ausführungsbeispiels ergänzt. Ein Unterschied ist die Gestaltung der Absetzungen 14, 24 des Karosseriebleches 10 und des Austauschbleches 20. An die jeweiligen Absetzkanten 13, 23, in die die Absetzungen 14, 24 jeweils münden, schließen sich entsprechende Schrägen 19, 29 an, die einen sanften Übergang der Absetzungen 14, 24 zu den entsprechenden Ausgangsniveaus der Außenseiten 11, 21 der Bleche 10, 20 ermöglichen. Der Winkel der Schrägen 19, 29 zu den entsprechenden Ausgangsniveaus der Außenseiten 11, 21 der Bleche 10, 20 beträgt im gezeigten Ausführungsbeispiel jeweils 3°. Allgemein kommen für dergleiche Schrägen vorzugsweise Winkel in einem Bereich von 1° bis 10° zum Einsatz. Ein weiterer Unterschied ist, dass anstelle der Blechtreibschraube ein Niet 42 zum Einsatz kommt, der mit seinem Nietschaft 44 durch den zwischen den beiden gegenüberliegenden freien Kanten 15, 25 liegenden Spalt 34 verläuft und sich durch die Bohrung 31 des Verbindungsschuhs 30 erstreckt. Der Setzkopf 43 liegt im verbauten Zustand auf den Außenseiten 11, 21 der Absetzungen 14, 24, also der Außenseiten 11, 21 der Fügebereiche 16, 26 des Karosseriebleches 10 bzw. des Austauschbleches 20 auf. Der Schließkopf 45 wiederum ist derart auf der Unterseite des Verbindungsschuhs 30 positioniert, dass die Fügebereiche 16, 26 und der Verbindungsschuh 30 zur Bereitstellung einer Montageverbindung zusammengedrückt werden, insbesondere um eine Aushärtung des Klebstoffes 32 und eine sichere stoffschlüssige Verbindung der Teile zueinander mittels des Klebstoffes 32 zu gewährleisten.

Wie in den Ausführungsbeispielen in Figur 4 und 5 verbleibt auch hier der Niet 42 in seiner Position und wird nach der oberhalb beschriebenen Bearbeitung mittels der Füllmasse 39 eingegossen. Nach Aushärtung der Füllmasse 39 sind auch hier die äußere Oberfläche der Füllmasse 39 und die benachbarten Bereiche der Außenseiten 11, 21 wie oberhalb beschrieben bearbeitet und insbesondere lackiert worden, was in einer Oberflächenschicht 40 resultiert.

| | | | |
|---|---|---|---|
| 10 | Karosserieblech | 29 | Schräge |
| 11 | Außenseite | 30 | Verbindungsschuh |
| 12 | Innenseite | 31 | Bohrung |
| 13 | Absetzkante | 32 | Klebstoff |
| 14 | Absetzung | 33 | Mulde |
| 15 | freie Kante | 34 | Spalt |
| 16 | Fügebereich | 35 | Blechtreibschraube |
| 17 | Bohrung | 36 | Schraubenkopf |
| 18 | Stufe | 37 | Außengewinde |
| 19 | Schräge | 38 | Unterlegscheibe |
| 20 | Austauschblech | 39 | Füllmasse |
| 21 | Außenseite | 40 | Oberflächenschicht |
| 22 | Innenseite | 41 | Klebstoff |
| 23 | Absetzkante | 42 | Niete |
| 24 | Absetzung | 43 | Setzkopf |
| 25 | freie Kante | 44 | Nietschaft |
| 26 | Fügebereich | 45 | Schließkopf |
| 27 | Bohrung | | |

## Patentansprüche

1. Verfahren zum Fügen eines ersten und eines zweiten Flächenteils (10, 20) mit jeweils einer Außenseite (11, 21) und einer Innenseite (12, 22), wobei in einem ersten Schritt an beiden gegenüberliegenden Fügebereichen (16, 26) der Flächenteile (10, 20) jeweils eine Absetzung (14, 24) vorgesehen wird, wobei die Absetzungen (14, 24) derart gestaltet sind, dass das Niveau der Außenseite (11, 21) im Bereich dieser Absetzungen (14, 24) unter dem Niveau der Außenseite (11, 21) der benachbarten Bereiche der jeweiligen Flächenteile (10, 21) liegt; wobei in einem weiteren Schritt die beiden Flächenteile (10, 20) unter Verwendung eines Klebstoffes (32) derart zueinander positioniert werden, dass beide Absetzungen (14, 24) eine Mulde (33) bilden, wobei entweder einer der Fügebereiche (16, 26) den jeweils anderen Fügebereich (26, 16) überlappt und wobei der Klebstoff (32) direkt zwischen den überlappenden Fügebereichen (16, 26) vorgesehen ist oder wobei eine Fügehilfe (30) zum Einsatz kommt, die jeweils die Fügebereiche (16, 26) der Flächenteile (10, 20) zumindest teilweise überlappt, wobei der Klebstoff (32) jeweils zwischen den Fügebereichen (16, 26) beider Flächenteile (10, 20) und der Fügehilfe (30) vorgesehen ist; wobei in einem weiteren Schritt eine mechanische Fügestelle (17, 27, 31, 35, 42) im Bereich der Mulde (33) zwischen den Fügebereichen (16, 26) oder bei der Verwendung einer Fügehilfe (30) zwischen den Fügebereichen (16, 26) und der Fügehilfe (30) zur Bereitstellung einer Montageverbindung eingesetzt wird; wobei in einem weiteren Schritt die Mulde (33) mit einer Füllmasse (39) ausgefüllt wird, um einen Niveauausgleich zu dem Niveau der Außenseite (11, 21) der benachbarten Bereichen der jeweiligen Flächenteile (10, 20) zu ermöglichen.

2. Verfahren nach Anspruch 1, **dadurch gekennzeichnet, dass** zumindest ein Flächenteil (10, 20) metallisch ist, wobei dessen Fügebereich (16, 26) stirnseitig im Bereich der Absetzung (14, 24) vor der Benetzung durch einen Klebstoff (32) durch ein Kaltumformverfahren bearbeitet wird.

3. Verfahren nach Anspruch 2, **dadurch gekennzeichnet, dass** beide Flächenteile (10, 20) metallisch sind, wobei beide Fügebereiche (16, 26) stirnseitig im Bereich der Absetzung (14, 24) vor der Benetzung durch einen Klebstoff (32) durch ein Kaltumformverfahren bearbeitet werden.

4. Verfahren nach einem der vorhergehenden Ansprüche, **dadurch gekennzeichnet, dass** vorzugsweise nach dem Aushärten des Klebstoffes (32) und vor dem Einbringen der Füllmasse (39) die Mulde (33) und die die Mulde (33) definierenden Bereiche der Flächenteile (10, 20) mit einem Korrosionsschutz versehen werden.

5. Verfahren nach einem der vorhergehenden Ansprüche, **dadurch gekennzeichnet, dass** die Fügehilfe (30) und/oder zumindest ein Flächenteil (10, 20) an dem jeweiligen Fügebereich (16, 26) mit zumindest einer Öffnung (31, 17, 27) versehen wird.

6. Verfahren nach einem der vorhergehenden Ansprüche, **dadurch gekennzeichnet**, die Absetzung (14, 24) zumindest eines Flächenteils (10, 20) eine Stufe (19) oder mehrfache Stufen aufweist.

7. Verfahren nach einem der vorhergehenden Ansprüche, **dadurch gekennzeichnet, dass** die Tiefe der Absetzung (14, 24) zumindest eines Flächenteils (10, 20) im Bereich zwischen der einfachen bis dreifachen Flächenteilstärke liegt.

8. Verfahren nach einem der vorhergehenden Ansprüche, **dadurch gekennzeichnet, dass** ein mehrkomponentiger Klebstoff (32, 41) und/oder eine mehrkomponentiger Füllmasse (39) zum Einsatz kommt.

9. Verfahren nach einem der vorhergehenden Ansprüche, **dadurch gekennzeichnet, dass** es als Reparaturverfahren im Karosseriebereich Anwendung findet, wobei eines der Flächenteile (10) ein Teil der Karosserie ist und das andere Flächenteil (20) ein Ersatzteil, welches mit der Karosserie verbunden wird.

10. Verbindungsbereich eines ersten und eines zweiten Flächenteils (10, 20) mit jeweils einer Außenseite (11, 21) und einer Innenseite (12, 22), wobei beide Flächenteile (10. 20) an Fügebereichen (16, 26) Absetzungen (14, 24) aufweisen, **dadurch gekennzeichnet, dass** die Flächenteile (10, 20) derart positioniert sind, dass die beide Absetzungen (14, 24) eine Mulde (33) bilden, wobei entweder einer der Fügebereiche (16, 26) den jeweils anderen Fügebereich (26, 16) überlappt und wobei ein Klebstoff (32) direkt zwischen den überlappenden Fügebereichen (16, 26) vorgesehen ist oder wobei eine Fügehilfe (30) zum Einsatz kommt, die jeweils die Fügebereiche (16, 26) der Flächenteile (10, 20) zumindest teilweise überlappt, wobei der Klebstoff (32) jeweils zwischen den Fügebereichen (16, 26) beider Flächenteile (10, 20) und der Fügehilfe (30) vorgesehen ist; wobei die Mulde (33) mit einer Füllmasse (39) ausgefüllt ist.

## Claims

1. A method for joining a first and a second surface part (10, 20) each having an outer face (11, 21) and an inner face (12, 22), wherein, in a first step, a lower portion (14, 24) is provided at each of two opposing joining regions (16, 26) of the surface parts (10, 20), wherein the lower portions (14, 24) are designed such that the level of the outer face (11, 21) in the region of said lower portions (14, 24) is below the level of the outer face (11, 21) of the adjoining regions of the respective surface parts (10, 21); wherein, in a further step, the two surface parts (10, 20) are positioned relative to one another using an adhesive (32) such that the two lower portions (14, 24) form a cavity (33), either wherein one of the joining regions (16, 26) overlaps the other joining region (26, 16) in each case and wherein the adhesive (32) is provided directly between the overlapping joining regions (16, 26), or wherein a joining aid (30) is used, which at least partially overlaps the respective joining regions (16, 26) of the surface parts (10, 20) and wherein the adhesive (32) is provided between the joining regions (16, 26) of the two surface parts (10, 20) and the joining aid (30) in each case; wherein, in a further step, a mechanical joint (17, 27, 31, 35, 42) is used in the region of the cavity (33) between the joining regions (16, 26) or, when using a joining aid (30), between the joining regions (16, 26) and the joining aid (30), to provide an assembly connection; wherein, in a further step, the cavity (33) is filled with a filler (39) in order to provide for leveling with respect to the level of the outer face (11, 21) of the adjoining regions of the respective surface parts (10, 20).

2. The method according to claim 1, **characterized in that** at least one surface part (10, 20) is made of metal, the joining region (16, 26) thereof being processed by means of a cold forming process on the end face thereof in the region of the lower portion (14, 24) before being wetted with an adhesive (32).

3. The method according to claim 2, **characterized in that** the two surface parts (10, 20) are made of metal, the two joining regions (16, 26) thereof being processed by means of a cold forming process on the end face thereof in the region of the lower portion (14, 24) before being wetted with an adhesive (32).

4. The method according to one of the preceding claims, **characterized in that** the cavity (33) and the regions of the surface parts (10, 20) defining the cavity (33) are provided with an anticorrosive agent, preferably after the adhesive (32) has hardened and before inserting the filler (39).

5. The method according to one of the preceding claims, **characterized in that** the joining aid (30) and/or at least one surface part (10, 20) is provided with at least one opening (31, 17, 27) in the relevant joining region (16, 26).

6. The method according to one of the preceding claims, **characterized in that** the lower portion (14, 24) of at least one surface part (10, 20) has one step (19) or multiple steps.

7. The method according to one of the preceding claims, **characterized in that** the depth of the lower portion (14, 24) of at least one surface part (10, 20) is within the range between one to three times the thickness of the surface part.

8. The method according to one of the preceding claims, **characterized in that** a multi-component adhesive (32, 41) and/or a multi-component filler (39) is used.

9. The method according to one of the preceding claims, **characterized in that** it is used as a repair method in the bodywork sector, one of the surface parts (10) being a part of the vehicle body and the other surface part (20) being a spare part which is connected to the vehicle body.

10. A connecting region of a first and a second surface part (10, 20) each having an outer face (11, 21) and an inner face (12, 22), the two surface parts (10, 20) having lower portions (14, 24) at joining regions (16, 26), **characterized in that** the surface parts (10, 20) are positioned such that the two lower portions (14, 24) form a cavity (33), either one of the joining regions (16, 26) overlapping the other joining region (26, 16) in each case and an adhesive (32) being provided directly between the overlapping joining regions (16, 26), or a joining aid (30) being used, which at least partially overlaps the respective joining regions (16, 26) of the surface parts (10, 20) and the adhesive (32) being provided between the joining regions (16, 26) of the two surface parts (10, 20) and the joining aid (30) in each case; the cavity (33) being filled with a filler (39).

## Revendications

1. Procédé pour joindre une première et une seconde partie de surface (10, 20) ayant chacune une face extérieure (11, 21) et une face intérieure (12, 22), dans lequel dans une première étape il est prévu respectivement un repli (14, 24) sur les deux zones de liaison opposées (16, 26) des parties de surface (10, 20), dans lequel les replis (14, 24) sont agencés de telle sorte que le niveau de la face extérieure (11, 21) au niveau de ces replis (14, 24) se trouve en dessous du niveau de la face extérieure (11, 21) des zones voisines des parties de surface (10, 21) respectives ; dans lequel dans une autre étape les deux parties de surface (10, 20) sont positionnées, à l'aide d'un adhésif (32), l'une par rapport à l'autre de sorte que les deux replis (14, 24) forment un évidement (33), dans lequel soit l'une des zones de jonction (16, 26) chevauche l'autre zone de jonction (26, 16) respective et dans lequel l'adhésif (32) est directement prévu entre les zones de jonction (16, 26) se chevauchant, soit dans lequel l'on utilise un auxiliaire de jonction (30), qui chevauche au moins partiellement respectivement les zones de jonction (16, 26) des parties de surface (10, 20), dans lequel l'adhésif (32) est respectivement prévu entre les zones de jonction (16, 26) des deux parties de surface (10, 20) et de l'auxiliaire de jonction (30) ; dans lequel dans une autre étape l'on emploie un joint mécanique (17, 27, 31, 35, 42) au niveau de l'évidement (33) entre les zones de jonction (16, 26) ou lors de l'emploi d'un auxiliaire de jonction (30) entre les zones de jonction (16, 26) et l'auxiliaire de jonction (30) pour fournir une liaison de montage ; dans lequel dans une autre étape l'évidement (33) est rempli avec une masse de remplissage (39) afin de permettre une compensation de niveau par rapport au niveau de la face extérieure (11, 21) des zones voisines des parties de surface (10, 20) respectives.

2. Procédé selon la revendication 1, **caractérisé en ce qu'**au moins une partie de surface (10, 20) est métallique, dans lequel sa zone de jonction (16, 26) est façonnée côté avant au niveau du repli (14, 24) avant le mouillage par un adhésif (32) par un procédé de formage à froid.

3. Procédé selon la revendication 2, **caractérisé en ce que** les deux parties de surface (10, 20) sont métalliques, dans lequel les deux zones de jonction (16, 26) sont façonnées côté avant au niveau du repli (14, 24) avant le mouillage par un adhésif (32) par un procédé de formage à froid.

4. Procédé selon l'une quelconque des revendications précédentes, **caractérisé en ce que**, de préférence après durcissement de l'adhésif (32) et avant d'introduire la masse de remplissage (39), l'évidement (33) et les zones des parties de surface (10, 20) définissant l'évidement (33) sont pourvus d'une protection contre la corrosion.

5. Procédé selon l'une quelconque des revendications précédentes, **caractérisé en ce que** l'auxiliaire de jonction (30) et/ou au moins une partie de surface (10, 20) sur la zone de jonction respective (16, 26) est pourvu(e) d'au moins une ouverture (31, 17, 27).

6. Procédé selon l'une quelconque des revendications précédentes, **caractérisé en ce que** le repli (14, 24) d'au moins une partie de surface (10, 20) présente un niveau (19) ou de multiples niveaux.

7. Procédé selon l'une quelconque des revendications précédentes, **caractérisé en ce que** la profondeur du repli (14, 24) d'au moins une partie de surface (10, 20) se trouve dans une plage comprise entre une fois à trois fois l'épaisseur de partie de surface.

8. Procédé selon l'une quelconque des revendications précédentes, **caractérisé en ce que** l'on utilise un adhésif à composants multiples (32, 41) et/ou une masse de remplissage à composants multiples (39).

9. Procédé selon l'une quelconque des revendications précédentes, **caractérisé en ce qu'**il est utilisé comme procédé de réparation dans le domaine de la carrosserie, dans lequel l'une des parties de surface (10) est une partie de carosserie et l'autre partie de surface (20) est une pièce de remplacement, laquelle est reliée à la carrosserie.

10. Zone de connexion d'une première et d'une seconde partie de surface (10, 20) ayant respectivement une face extérieure (11, 21) et une face intérieure (12, 22), dans laquelle les deux parties de surface (10, 20) sur les zones de jonction (16, 26) présentent des replis (14, 24), **caractérisée en ce que** les parties de surface (10, 20) sont positionnées de telle sorte que les deux replis (14, 24) forment un évidement (33), dans laquelle soit une des zones de jonction (16, 26) chevauche l'autre zone de jonction (26, 16) respective et dans laquelle il est prévu un adhésif (32) directement entre les zones de jonction (16, 26) se chevauchant ou dans laquelle l'on utilise un auxiliaire de jonction (30), qui chevauche au moins partiellement les zones de jonction (16, 26) des parties de surface (10, 20), dans laquelle l'adhésif (32) est respectivement prévu entre les zones de jonction (16, 26) des deux parties de surface (10, 20) et l'auxiliaire de jonction (30) ; dans laquelle l'évidement (33) est rempli avec une masse de remplissage (39).
